# EUROPÄISCHE PATENTSCHRIFT

(11) **EP 0 900 012 B1**
(45) Veröffentlichungstag und Bekanntmachung des Hinweises auf die Patenterteilung: **27.03.2002**
(21) Anmeldenummer: 97921687.6
(22) Anmeldetag: 22.04.1997
(51) Int. Cl.: A01N 37/52, A01N 47/24

(54) **FUNGIZIDE MISCHUNGEN**
FUNGICIDE MIXTURES
MELANGES FONGICIDES

(30) Priorität: 26.04.1996 DE 19616682; 30.04.1996 DE 19617235; 02.09.1996 DE 19635510
(43) Veröffentlichungstag der Anmeldung: 10.03.1999
(73) Patentinhaber: BASF AKTIENGESELLSCHAFT, 67056 Ludwigshafen (DE)
(72) Erfinder: MÜLLER, Ruth, D-67159 Friedelsheim (DE); BAYER, Herbert, D-68159 Mannheim (DE); SAUTER, Hubert, D-68167 Mannheim (DE); AMMERMANN, Eberhard, D-64646 Heppenheim (DE); LORENZ, Gisela, D-67434 Hambach (DE); STRATHMANN, Siegfried, D-67117 Limburgerhof (DE); SCHELBERGER, Klaus, D-67161 Gönnheim (DE); MAPPES, Dietrich, D-67368 Westheim (DE); LEYENDECKER, Joachim, D-67454 Hassloch (DE); MÜLLER, Bernd, D-67227 Frankenthal (DE)
(86) Internationale Anmeldenummer: EP9702021
(87) Internationale Veröffentlichungsnummer: WO9740675

(56) Entgegenhaltungen:
- EP-A- 0 645 084
- WO-A-95/21153
- WO-A-96/01256
- WO-A-96/01258
- WO-A-97/06680
- DE-A- 19 528 651
- PESTICIDE SCIENCE, Bd. 44, Nr. 1, Mai 1995, Seiten 77-79, XP002020496 FRAINE DE P J ET AL: "A NEW SERIES OF BROAD-SPECTRUM BETA-METHOXYACRYLATE FUNGICIDES WITH AN OXIME ETHER SIDE-CHAIN"
- RESEARCH DISCLOSURE, Nr. 348, 1.April 1993, Seite 267, COMPL XP000304224 "MIXTURES OF FUNGICIDES AND HERBICIDES"
- PHYTOMA. LA DEFENSE DES VEGETAUX, Nr. 474, Juli 1995, Seiten 12-16, XP000612912 GOUOT J -M: "COMITE D'ACTION CONCERNANT LA RESISTANCE AUX FONGICIDES (FRAC) REUNION ANNUELLE DU GROUPE DE TRAVAIL >"

## Beschreibung

Die vorliegende Erfindung betrifft eine fungizide Mischung, welche
a) einen Oximether der Formel I, 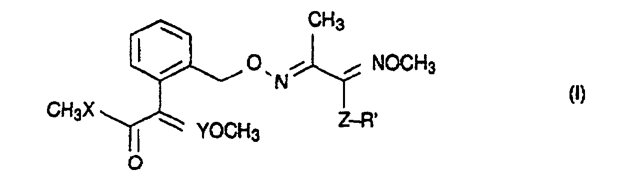 in der die Substituenten die folgende Bedeutung haben:
   - X: Sauerstoff oder Amino (NH);
   - Y: CH oder N;
   - Z: Sauerstoff, Schwefel, Amino (NH) oder C₁-C₄-Alkylamino (N-C₁-C₄-Alkyl);
   - R': C₁-C₆-Alkyl, C₁-C₆-Halogenalkyl, C₃-C₆-Alkenyl, C₂-C₆-Halogenalkenyl, C₃-C₆-Alkinyl, C₃-C₆-Halogenalkinyl, C₃-C₆-Cycloalkyl-methyl, oder Benzyl, welches partiell oder vollständig halogeniert sein kann und/oder einen bis drei der folgenden Reste tragen kann: Cyano, C₁-C₄-Alkyl, C₁-C₄-Halogenalkyl, C₁-C₄-Alkoxy, C₁-C₄-Halogenalkoxy und C₁-C₄-Alkylthio;
   und/oder
b) ein Carbamat der Formel II, 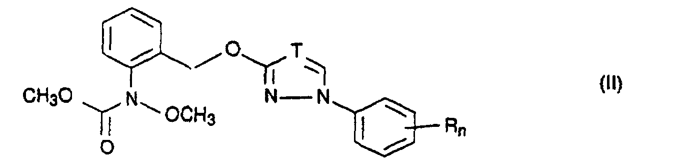 in der T CH oder N bedeutet, n für 0, 1 oder 2 steht und R Halogen, C₁-C₄-Alkyl oder C₁-C₄-Halogenalkyl bedeutet, wobei die Reste R verschieden sein können, wenn n für 2 steht, und
c) (±)-(2-Chlorphenyl) (4-chlorphenyl) (pyrimidin-5-yl)-methanol III 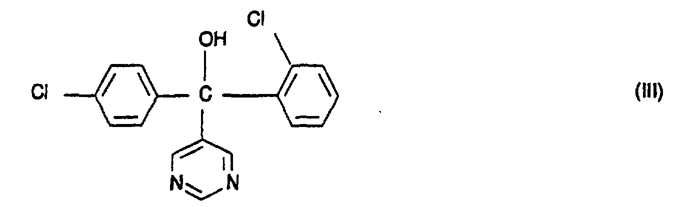 in einer synergistisch wirksamen Menge enthält.

Außerdem betrifft die Erfindung Verfahren zur Bekämpfung von Schadpilzen mit Mischungen der Verbindungen I und II und die Verwendung der Verbindung I und der Verbindung II zur Herstellung derartiger Mischungen.

Die Verbindungen der Formel I, ihre Herstellung und ihre Wirkung gegen Schadpilze ist aus der Literatur bekannt (WO-A 95/21,153, WO-A 95/21,154, DE-A 195 28 651.0).

Verbindungen der Formel II, deren Herstellung und deren Wirkung gegen Schadpilze sind in der WO-A 96/01,256 und der WO-A 96/01,258 beschrieben.

Ebenfalls bekannt ist die Verbindung III (GB-A 1,218,623; common name: Fenarimol), deren Herstellung und deren Wirkung gegen Schadpilze.

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurde die eingangs definierte Mischung gefunden. Es wurde außerdem gefunden, daß sich bei gleichzeitiger gemeinsamer oder getrennter Anwendung der Verbindungen I und/oder II und der Verbindung III oder bei Anwendung der Verbindungen I und/oder II und der Verbindungen III nacheinander Schadpilze besser bekämpfen lassen als mit den Einzelverbindungen.

Die Erfindung umfaßt dabei binäre Mischungen aus Verbindungen I und III bzw. II und III wie auch Mischungen aus Verbindungen I, II und III.

Die allgemeine Formel I steht insbesondere repräsentativ für Oximether, in denen X Sauerstoff und Y CH bedeutet oder X Amino und Y N bedeutet.

Außerdem werden Verbindungen I bevorzugt, in denen Z für Sauerstoff steht.

Gleichermaßen werden Verbindungen I bevorzugt, in denen R' für Alkyl oder Benzyl steht.

Im Hinblick auf ihre Verwendung in den erfindungsgemäßen synergistischen Mischungen werden insbesondere die in den folgenden Tabellen zusammengestellten Verbindungen I bevorzugt:

### Tabelle 1.

Verbindungen der Formel IA, in denen ZR' für eine Verbindung jeweils einer Zeile der Tabelle A entspricht

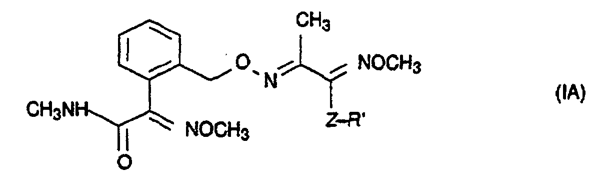

### Tabelle 2.

Verbindungen der Formel IB, in denen ZR' für eine Verbindung jeweils einer Zeile der Tabelle A entspricht

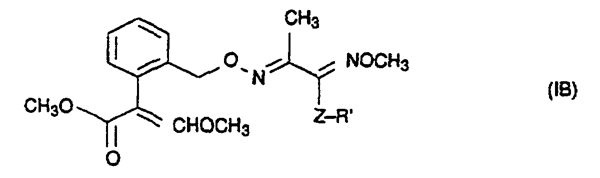

**Tabelle A:**

| **Nr.** | **ZR'** |
|---|---|
| I.1 | O-CH₂CH₂CH₃ |
| I.2 | O-CH(CH₃)₂ |
| I.3 | O-CH₂CH₂CH₂CH₃ |
| I.4 | O-CH(CH₃)CH₂CH₃ |
| I.5 | O-CH₂CH(CH₃)₂ |
| I.6 | O-C(CH₃)₃ |
| I.7 | S-C(CH₃)₃ |
| I.8 | O-CH (CH₃)CH₂CH₂CH₃ |
| I.9 | O-CH₂C(CH₃)₃ |
| I.10 | O-CH₂C(Cl)=CCl₂ |
| I.11 | O-CH₂CH=CH-Cl (trans) |
| I.12 | O-CH₂C(CH₃)=CH₂ |
| I.13 | O-CH2-(cyclopropyl) |
| I.14 | O-CH₂-C₆H₅ |
| I.15 | O-CH₂-[4-F-C₆H₄] |
| I.16 | O-CH₂CH₃ |
| I.17 | O-CH(CH₂CH₃)₂ |

Die Verbindungen der Formel I können in Bezug auf die C=Y-Doppelbindung in der E- oder der Z-Konfiguration (in Bezug auf die Carbonsäurefunktion) vorliegen. Demgemäß können sie in der erfindungsgemäßen Mischung jeweils entweder als reine E- oder Z-Isomere oder als E/Z-Isomerenmischung Verwendung finden. Bevorzugt findet jeweils die E/Z-Isomerenmischung oder das E-Isomere Anwendung, wobei das E-Isomere bei der Verbindung I besonders bevorzugt ist.

Die C=N-Doppelbindungen der Oximethergruppierungen in der Seitenkette der Verbindungen I können jeweils als reine E- oder Z-Isomere oder als E/Z-Isomerengemische vorliegen. Die Verbindungen I können sowohl als Isomerengemische als auch als reine Isomere in den erfindungsgemäßen Mischungen verwendet werden. Im Hinblick auf ihre Verwendung werden insbesondere Verbindungen I bevorzugt, in denen die endständige Oximethergruppierung der Seitenkette in der cis-Konfiguration vorliegt (OCH₃-Gruppe zu ZR').

Die Verbindungen I, II und III sind wegen des basischen Charakters in der Lage, mit anorganischen oder organischen Säuren oder mit Metallionen Salze oder Addukte zu bilden.

Die Formel II repräsentiert insbesondere Carbamate, in denen die Kombination der Substituenten einer Zeile der folgenden Tabelle entspricht:

**Tabelle 3:**

| Nr. | **T** | **R**_{**n**} |
|---|---|---|
| II.53 | N | 2-F |
| II.54 | N | 3-F |
| II.55 | N | 4-F |
| II.56 | N | 2-Cl |
| II.57 | N | 3-Cl |
| II.58 | N | 4-Cl |

| Nr. | T | Rₙ |
|---|---|---|
| II.59 | N | 2-Br |
| II.60 | N | 3-Br |
| II.61 | N | 4-Br |
| II.62 | N | 2-CH₃ |
| II.63 | N | 3-CH₃ |
| II.64 | N | 4-CH₃ |
| II.65 | N | 2-CH₂CH₃ |
| II.66 | N | 3-CH₂CH₃ |
| II.67 | N | 4-CH₂CH₃ |
| II.68 | N | 2-CH(CH₃)₂ |
| II.69 | N | 3-CH(CH₃)₂ |
| II.70 | N | 4-CH(CH₃)₂ |
| II.71 | N | 2-CF₃ |
| II.72 | N | 3-CF₃ |
| II.73 | N | 4-CF₃ |
| II.74 | N | 2,4-F₂ |
| II.75 | N | 2,4-Cl₂ |
| II.76 | N | 3,4-Cl₂ |
| II.77 | N | 2-Cl, 4-CH₃ |
| II.78 | N | 3-Cl, 4-CH₃ |
| II.79 | CH | 2-F |
| II.80 | CH | 3-F |
| II.81 | CH | 4-F |
| II.82 | CH | 2-Cl |
| II.83 | CH | 3-Cl |
| II.84 | CH | 4-Cl |
| II.85 | CH | 2-Br |
| II.86 | CH | 3-Br |
| II.87 | CH | 4-Br |
| II.88 | CH | 2-CH₃ |
| II.89 | CH | 3-CH₃ |
| II.90 | CH | 4-CH₃ |
| II.91 | CH | 2-CH₂CH₃ |
| II.92 | CH | 3-CH₂CH₃ |
| II.93 | CH | 4-CH₂CH₃ |
| II.94 | CH | 2-CH(CH₃)₂ |
| II.95 | CH | 3-CH(CH₃)₂ |
| II.96 | CH | 4-CH(CH₃)₂ |
| II.97 | CH | 2-CF₃ |
| II.98 | CH | 3-CF₃ |
| II.99 | CH | 4-CF₃ |
| II.100 | CH | 2,4-F₂ |
| II.101 | CH | 2,4-Cl₂ |
| II.102 | CH | 3,4-Cl₂ |
| II.103 | CH | 2-Cl, 4-CH₃ |
| II.104 | CH | 3-Cl, 4-CH₃ |

Besonders bevorzugt werden die Verbindungen II.12, II.23, II.32 und II.38.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I, II und III ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und/oder II und III bzw. die gleichzeitige gemeinsame oder getrennte Verwendung der Verbindungen I und/oder II und III zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Rhynosporium Secalis, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und/oder II und III können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und/oder II und III werden üblicherweise in einem Gewichtsverhältnis von 10:1 bis 0.1:1, vorzugsweise 5:1 bis 0.2:1, insbesondere 3:1 bis 0.3:1 angewendet.

Die Aufwandmengen der erfindungsgemäßen Mischungen liegen je nach Art des gewünschten Effekts bei 0,01 bis 3 kg/ha, vorzugsweise 0,01 bis 1,5 kg/ha, insbesondere 0,01 bis 0,5 kg/ha.

Die Aufwandmengen liegen dabei im allgemeinen für die Verbindungen I und/oder II bei 0,005 bis 0,5 kg/ha, vorzugsweise 0,005 bis 0,5 kg/ha, insbesondere 0,005 bis 0,3 kg/ha.

Die Aufwandmengen für die Verbindung III liegen entsprechend üblicherweise bei 0,005 bis 0,5 kg/ha, vorzugsweise 0,01 bis 0,5 kg/ha, insbesondere 0,01 bis 0,3 kg/ha.

Bei der Saatgutbehandlung werden im allgemeinen Aufwandmengen an Mischung von 0,001 bis 10 g/kg Saatgut, vorzugsweise 0,01 bis 10 g/kg, insbesondere 0,01 bis 8 g/kg verwendet.

Sofern für Pflanzen pathogene Schadpilze zu bekämpfen sind, erfolgt die getrennte oder gemeinsame Applikation der Verbindungen I und/oder II und III oder der Mischungen aus den Verbindungen I und/oder II und III durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und/oder II und III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und/oder II oder III oder der Mischung aus den Verbindungen I und/oder II und III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I und/oder II oder III bzw. der Mischung aus den Verbindungen I und/oder II und III. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I und/oder II und III bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und/oder II und III bei getrennter Ausbringung, behandelt. Die Anwendung kann vor oder nach dem Befall durch die Schadpilze erfolgen.

Die fungizide Wirkung der Verbindungen und der Mischungen läßt sich durch folgende Versuche zeigen:

Die Wirkstoffe werden getrennt oder gemeinsam als 10 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

E = x + y - x·y/100

- E: zu erwartender Wirkungsgrad, ausgedrückt in % der unbehandelten Kontrolle, beim Einsatz der Mischung aus den Wirkstoffen A und B in den Konzentrationen a und b
- x: der Wirkungsgrad, ausgedrückt in % der unbehandelten Kontrolle, beim Einsatz des Wirkstoffs A in der Konzentration a
- y: der Wirkungsgrad, ausgedrückt in % der unbehandelten Kontrolle, beim Einsatz des Wirkstoffs B in der Konzentration b

Der Wirkungsgrad (**W**) wird nach der Formel von Abbot wie folgt berechnet:

W = (1 - α)•100/β

- α: entspricht dem Pilzbefall der behandelten Pflanzen in % und
- β: entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

### Beispiele 1 bis 7 - kurative Wirksamkeit gegen Puccinia recondita an Weizen (Weizenbraunrost

Blätter von in Töpfen gewachsenen Weizensämlingen der Sorte "Frühgold" wurden mit Sporen des Braunrostes (Puccinia recondita) bestäubt. Danach wurden die Töpfe für 24 Stunden in eine Kammer mit hoher Luftfeuchtigkeit (90 bis 95 %) und 20 bis 22°C gestellt. Während dieser Zeit keimten die Sporen aus und die Keimschläuche drangen in das Blattgewebe ein. Die infizierten Pflanzen wurden am nächsten Tag mit einer wäßrigen Wirkstoffaufbereitung, die aus einer Stammlösung bestehend aus 10 % Wirkstoff, 63 % Cyclohexanon und 27 % Emulgiermittel angesetzt worden war, tropfnaß besprüht. Nach dem Antrocknen des Spritzbelages wurden die Versuchspflanzen im Gewächshaus bei Temperaturen zwischen 20 und 22°C und 65 bis 70 % relativer Luftfeuchte für 7 Tage kultiviert. Dann wurde das Ausmaß der Rostpilzentwicklung auf den Blättern ermittelt.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S.R. (Calculating synergistic and antagonistic responses of herbicide Combinations", Weeds, 15, S. 20 bis 22, 1967) ermittelt und mit den beobachteten Wirkungsgraden verglichen.

**Tabelle 4**

| Bsp. | Wirkstoff | Wirkstoffkonzentration in der Spritzbrühe in ppm | Wirkungsgrad in % der unbehandelten Kontrolle |
|---|---|---|---|
| 1V | Kontrolle (unbehandelt) | (100 % Befall) | 0 |
| 2V | A = Tab. 1A, Nr. 2 | 6,3 3,1 | 30 0 |
| 3V | B = Tab. 1A, Nr. 4 | 3,1 | 10 |
| 4V | III = Fenarimol | 6,3 3,1 | 70 0 |

**Tabelle 5**

| Bsp. | Wirkstoffkonzentration in der Spritzbrühe in ppm | beobachteter Wirkungsgrad | berechneter Wirkungsgrad *) |
|---|---|---|---|
| 5 | 6,3 A + 3,1 III | 90 | 79 |
| 6 | 3,1 A + 3,1 III | 40 | 0 |
| 7 | 3,1 B + 3,1 III | 50 | 10 |

| | | | |
|---|---|---|---|
| *) berechnet nach der Colby Formel | | | |

### Beispiele 8 bis 15 - Wirksamkeit gegen Puccinia recondita an Weizen (Weizenbraunrost)

Blätter von in Töpfen gewachsenen Weizensämlingen der Sorte "Frühgold" wurden mit Sporen des Braunrostes (Puccinia recondita) bestäubt. Danach wurden die Töpfe für 24 Stunden in eine Kammer mit hoher Luftfeuchtigkeit (90 bis 95 %) und 20 bis 22°C gestellt. Während dieser Zeit keimten die Sporen aus und die Keimschläuche drangen in das Blattgewebe ein. Die infizierten Pflanzen wurden am nächsten Tag mit einer wäßrigen Wirkstoffaufbereitung, die aus einer Stammlösung bestehend aus 10 % Wirkstoff, 63 % Cyclohexanon und 27 % Emulgiermittel angesetzt worden war, tropfnaß besprüht. Nach dem Antrocknen des Spritzbelages wurden die Versuchspflanzen im Gewächshaus bei Temperaturen zwischen 20 und 22°C und 65 bis 70 % relativer Luftfeuchte für 7 Tage kultiviert. Dann wurde das Ausmaß der Rostpilzentwicklung auf den Blättern ermittelt.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20-22, 1967) ermittelt und mit den beobachteten Wirkungsgraden verglichen.

**Tabelle 6**

| Bsp. | Wirkstoff | Wirkstoffkonzentration in der Spritzbrühe in ppm | Wirkstoffgrad in % |
|---|---|---|---|
| 8V | Kontrolle (unbehandelt) | (90 % Befall) | 0 |
| 9V | Verbindung Nr. II.32 aus Tabelle 3 = C | 3,1 1,6 | 0 |
| 10V | Verbindung Nr. II.38 aus Tabelle 3 = D | 3,1 1,6 | 70 0 |
| 11V | III = Fenarimol | 12,5 6,3 | 20 0 |

**Tabelle 7**

| Bsp. | Wirkstoffkonzentration in der Spritzbrühe in ppm | beobachteter Wirkungsgrad | berechneter Wirkungsgrad |
|---|---|---|---|
| 12 | 3,1 C + 12,5 III | 40 | 20 |
| 13 | 1,6 C + 6,3 III | 25 | 0 |
| 14 | 3,1 D + 12,5 III | 90 | 76 |
| 15 | 1,6 D + 6,3 III | 30 | 0 |

## Patentansprüche

1. Fungizide Mischung, enthaltend
a) einen Oximether der Formel I, 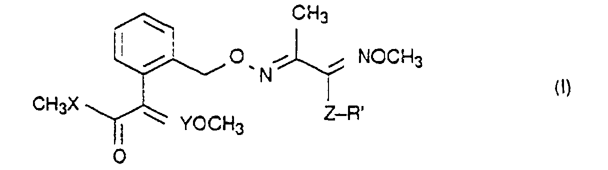 in der die Substituenten die folgende Bedeutung haben:
X Sauerstoff oder Amino (NH) ;
Y CH oder N;
Z Sauerstoff, Schwefel, Amino (NH) oder C₁-C₄-Alkylamino (N-C₁-C₄-Alkyl);
R' C₁-C₆-Alkyl, C₁-C₆-Halogenalkyl, C₃-C₆-Alkenyl, C₂-C₆-Halogenalkenyl, C₃-C₆-Alkinyl, C₃-C₆-Halogenalkinyl, C₃-C₆-Cycloalkyl-methyl, oder Benzyl, welches partiell oder vollständig halogeniert sein kann und/oder einen bis drei der folgenden Reste tragen kann: Cyano, C₁-C₄-Alkyl, C₁-C₄-Halogenalkyl, C₁-C₄-Alkoxy, C₁-C₄-Halogenalkoxy und C₁-C₄-Alkylthio;
und/oder
b) ein Carbamat der Formel II, 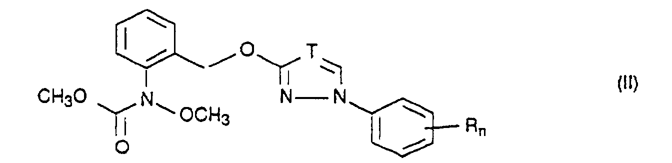 in der T CH oder N bedeutet, n für 0, 1 oder 2 steht und R Halogen, C₁-C₄-Alkyl und C₁-C₄-Halogenalkyl bedeutet, wobei die Reste R verschieden sein können, wenn n für 2 steht, und
c) (±)-(2-Chlorphenyl) (4-chlorphenyl)(pyrimidin-5-yl)-methanol (III) 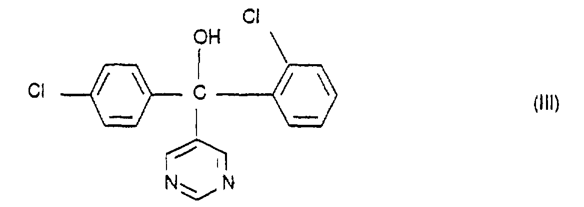 in einer synergistisch wirksamen Menge.

2. Fungizide Mischung nach Anspruch 1, **dadurch gekennzeichnet, daß** das Gewichtsverhältnis der Verbindungen I und/oder II zu der Verbindung III 10:1 bis 0,1:1 beträgt.

3. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I und/oder II gemäß Anspruch 1 und der Verbindung der Formel III gemäß Anspruch 1 in einer synergistisch wirksamen Menge behandelt.

4. Verfahren nach Anspruch 3, **dadurch gekennzeichnet, daß** man eine Verbindung I und/oder II gemäß Anspruch 1 und die Verbindung III gemäß Anspruch 1 gleichzeitig gemeinsam oder getrennt oder nacheinander ausbringt.

5. Verfahren nach Anspruch 3, **dadurch gekennzeichnet, daß** man die Schadpilze, deren Lebensraum oder die von ihnen freizuhaltenden Pflanzen, Samen, Böden, Flächen, Materialien oder Räume mit 0,005 bis 0,5 kg/ha einer Verbindung I und/oder II gemäß Anspruch 1 behandelt.

6. Verfahren nach Anspruch 3, **dadurch gekennzeichnet, daß** man die Schadpilze, deren Lebensraum oder die von ihnen freizuhaltenden Pflanzen, Samen, Böden, Flächen, Materialien oder Räume mit 0,05 bis 0,5 kg/ha der Verbindung III gemäß Anspruch 1 behandelt.

7. Verwendung der Verbindungen I und/oder II gemäß Anspruch 1 zur Herstellung von fungizid wirksamen synergistischen Mischungen gemäß Anspruch 1.

8. Verwendung der Verbindung III gemäß Anspruch 1 zur Herstellung von fungizid wirksamen synergistischen Mischungen gemäß Anspruch 1.

## Claims

1. A fungicidal mixture comprising
a) an oxime ether of the formula I 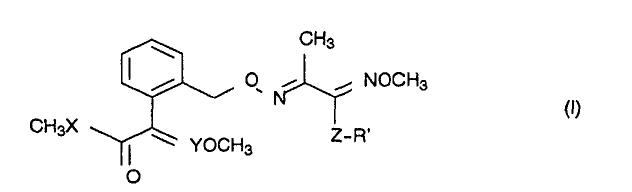 where the substituents have the following meanings:
x is oxygen or amino (NH);
Y is CH or N;
z is oxygen, sulfur, amino (NH) or C₁-C₄-alkylamino (N-C₁-C₄-alkyl);
R' is C₁-C₆-alkyl, C₁-C₆-haloalkyl, C₃-C₆-alkenyl, C₂-C₆-haloalkenyl, C₃-C₆-alkynyl, C₃-C₆-haloalkynyl, C₃-C₆-cycloalkylmethyl, or is benzyl which can be partially or fully halogenated and/or can have attached to it one to three of the following radicals: cyano, C₁-C₄-alkyl, C₁-C₄-haloalkyl, C₁-C₄-alkoxy, C₁-C₄-haloalkoxy and C₁-C₄-alkylthio;
and/or
b) a carbamate of the formula II, 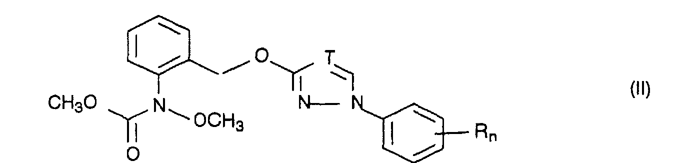 where T is CH or N, n is 0, 1 or 2 and R is halogen, C₁-C₄-alkyl or C₁-C₄-haloalkyl, it being possible for the radicals R to be different when n is 2, and
c) (±)-(2-chlorophenyl)(4-chlorophenyl)(pyrimidin-5-yl)-methanol III 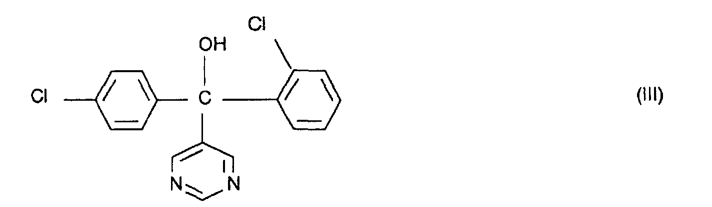 in a synergistically active amount.

2. A fungicidal mixture as claimed in claim 1 wherein the weight ratio of the compounds I and/or II to the compound III is 10:1 to 0.1:1.

3. A method of controlling harmful fungi, which comprises treating the harmful fungi, their environment, or the plants, seeds, soils, areas, materials or spaces to be kept free from them with a compound of the formula I and/or II as set forth in claim 1 and the compound of the formula III as set forth in claim 1 in a synergistically active amount.

4. A method as claimed in claim 3, wherein a compound I and/or II as set forth in claim 1 and the compound III as set forth in claim 1 are applied simultaneously together or separately or in succession.

5. A method as claimed in claim 3, wherein the harmful fungi, their environment, or the plants, seeds, soils, areas, materials or spaces to be kept free from them are treated with from 0.005 to 0.5 kg/ha of a compound I and/or II as set forth in claim 1.

6. A method as claimed in claim 3, wherein the harmful fungi, their environment, or the plants, seeds, soils, areas, materials or spaces to be kept free from them are treated with from 0.05 to 0.5 kg/ha of the compound III as set forth in claim 1.

7. The use of the compounds I and/or II as set forth in claim 1 for the preparation of fungicidally active synergistic mixtures as claimed in claim 1.

8. The use of the compound III as set forth in claim 1 for the preparation of fungicidally active synergistic mixtures as claimed in claim 1.

## Revendications

1. Mélange fongicide, contenant
a) un oxime-éther de formule I, 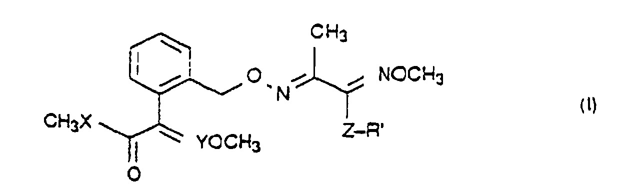 dans laquelle les substituants ont la signification suivante:
X oxygène ou amino (NH);
Y CH ou N;
Z oxygène, soufre, amino (NH) ou alkyl(C₁-C₄)amino (N-alkyle en C₁-C₄);
R' alkyle en C₁-C₆, halogénoalkyle en C₁-C₆, alcényle en C₃-C₆, halogénoalcényle en C₃-C₆, alcynyle en C₃-C₆, halogénoalcynyle en C₃-C₆, cycloalkyl-(C₃-C₆)-méthyle, ou benzyle, qui peut être partiellement ou totalement halogéné et/ou peut porter un à trois des restes suivants: cyano, alkyle en C₁-C₄, halogénoalkyle en C₁-C₄, alcoxy en C₁-C₄, halogénoalcoxy en C₁-C₄ et alkylthio en C₁-C₄; et/ou
b) un carbamate de formule II, 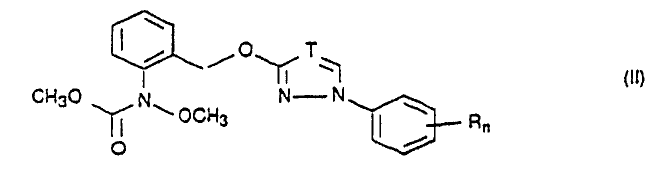 dans laquelle T représente CH ou N, n vaut 0, 1 ou 2 et R désigne un groupe halogéno, alkyle en C₁-C₄ et halogénoalkyle en C₁-C₄, tandis que les restes R peuvent être différents, lorsque n vaut 2,
et
c) du (±)-(2-chlorophényl) (4-chlorophényl) (pyrimidine-5-yl)-méthanol (III) 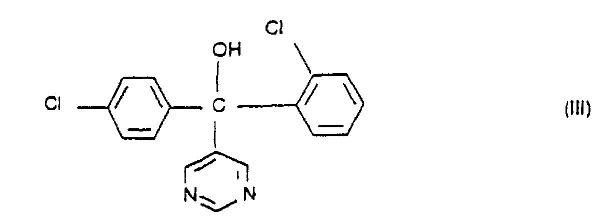 en une quantité à activité synergique.

2. Mélange fongicide selon la revendication 1, **caractérisé par le fait que** le rapport en poids des composés I et/ou II au composé III est de 10:1 à 0,1:1.

3. Procédé pour la lutte contre les champignons nuisibles, **caractérisé par le fait qu'**on traite les champignons nuisibles, leur biotope ou les plantes, semences, sols, surfaces, matériaux ou espaces à rendre exempts de tels champignons, avec un composé de formule I et/ou II selon la revendication 1 et le composé de formule III selon la revendication 1 dans une quantité à efficacité synergique.

4. Procédé selon la revendication 3, **caractérisé par le fait qu'**on applique un composé I et/ou II selon la revendication 1 et le composé III selon la revendication 1, simultanément conjointement ou séparément ou l'un après l'autre.

5. Procédé selon la revendication 3, **caractérisé par le fait qu'**on traite les champignons nuisibles, leur biotope ou les plantes, semences, sols, surfaces, matériaux ou espaces à rendre exempts de tels champignons, avec 0,005 à 0,5 kg/ha d'un composé I et/ou II selon la revendication 1.

6. Procédé selon la revendication 3, **caractérisé par le fait qu'**on traite les champignons nuisibles, leur biotope ou les plantes, semences, sols, surfaces, matériaux ou espaces à rendre exempts de tels champignons, avec 0,05 à 0,5 kg/ha du composé III selon la revendication 1.

7. Utilisation des composés I et/ou II selon la revendication 1 pour la préparation de mélanges synergiques à activité fongicide selon la revendication 1.

8. Utilisation des composés III selon la revendication 1 pour la préparation de mélanges synergiques à activité fongicide selon la revendication 1.
